# EUROPEAN PATENT SPECIFICATION

(11) **EP 1 717 009 B1**
(45) Date of publication and mention of the grant of the patent: **26.05.2010**
(21) Application number: 05252635.7
(22) Date of filing: 27.04.2005
(51) Int. Cl.: B29C 45/17, B29C 71/00, C08J 7/06, D06P 1/94

(54) **Method of dyeing or reforming an injection moulded plastic product**
Verfahren zum Färben oder Veränderung eines Kunststoffgegenstandes beim Spritgiessen
Procédé pour colorer or réformer un object en matiére plastique moulé par injection

(43) Date of publication of application: 02.11.2006
(73) Proprietor: Munekata Co. Ltd., Fukushima-shi, Fukushima-ken (JP)
(72) Inventor: Umino, Yuuji, Fukushima-shi Fukushima-ken (JP); Tateyama, Hirofumi, Fukushima-shi Fukushima-ken (JP)
(74) Representative: ip21 Ltd

(56) References cited:
- EP-A- 1 179 405
- WO-A-97/00353
- US-A- 5 560 963
- US-A1- 2003 146 552
- US-A1- 2003 228 485
- MASAHIRO OHSHIMA: ANTEC - ANNUAL TECHNICAL CONFERENCE, May 2004 (2004-05), pages 580-582, XP002347357
- PATENT ABSTRACTS OF JAPAN vol. 2003, no. 12, 5 December 2003 (2003-12-05) -& JP 2004 330720 A (HITACHI MAXELL LTD; SEIKOH GIKEN CO LTD), 25 November 2004 (2004-11-25)
- DATABASE WPI Section Ch, Week 200422 Derwent Publications Ltd., London, GB; Class A32, AN 2004-230505 XP002366280 -& JP 2003 320556 A (ASAHI KASEI KK) 11 November 2003 (2003-11-11)

## Description

### BACKGROUND OF THE INVENTION

### 1. FIELD OF THE INVENTION

The present invention relates to a method of dyeing or reforming a surface of a plastic injection moulding; more specifically, this invention relates to a method of dyeing or reforming a moulding surface inside a mould for injection-moulding.

### 2. DESCRIPTION OF THE RELATED ART

In a method of coating with paint or reformer to dye or reform the plastic moulding surface, there exist problems in terms of anti-wearing characteristic, cost and the like; and when this coating is applied, there are concerns about a work environment as well as an environmental problem which occurs after the moulding becomes a waste, because an organic solvent is used in general.

Therefore there has been a request for technological proposals for dyeing or reforming the moulding surface without using the organic solvent; at present the following technologies are disclosed, though there are only a few of them.
[Patent Document 1] Japanese Patent Laid-Open in Publication No.2001-226884

This invention is directed to a non-aqueous dyeing method for such materials as a resin moulding, rubber moulding and fibre, with a dye conducted in supercritical carbon dioxide; and this invention relates to, in the non-aqueous method of dyeing a material in the supercritical carbon dioxide, a dyeing method with supercritical dye liquor made from supercritical carbon dioxide and co-solvent thereof; and the dyeing material is any one of the resin moulding, rubber moulding or fibre. The co-solvent of the supercritical carbon dioxide is a compound liquid mixed with one or more than one kind of water or polar organic solvent; the amount of the co-solvent accounts for 0.01∼10% of the supercritical carbon dioxide. The invention relates to a non-aqueous dyeing method of dyeing in the compound liquid of water, polar organic solvent alcohol or dimethylformamido, mixed with the supercritical carbon dioxide. This invention, however, is used with an autoclave for dyeing, therefore it takes time to carry a material to be treated into or out of the autoclave. Because the autoclave consumes a large amount of dye, it leads to a waste of money; also it is necessary to keep the autoclave at high pressures and high temperatures, which results in a large amount of energy consumption.
[Patent Document 2] Japanese Patent Laid-Open in Publication No. H6-081277

This invention relates to a method which doesn't involve such troublesome work as creating vacuum atmosphere; in which it is possible to dye on both sides of chromatic optical components, and it is possible to dye at high concentrations over the relatively low heating temperature during a short period of time; and the invention relates to a method in which optical components stained with mixed colour can be easily manufactured; and in which optical components and powdery resin dyeing agents are heated with both of which contacted with each other; the optical components and the powdery resin dyeing agents are placed inside a closed vessel to enable homogeneous contact between the optical components and the resin dyeing agents; and a method of heating and dyeing while adding such motion as rotation.

However, in this method the dyeing agents don't permeate into the dyed components, but dyeing layers are only formed on the surface; therefore it is unsuitable for a moulding on which such problems as peeling may occur or friction is likely to develop.
[Patent Document 3] Published Japanese translations of PCT international patent publication No.H 8-506612

This invention provides a method of impregnating various kinds of polymer carriers with impregnant, and a method of simultaneously contacting the polymer carriers, impregnant, carrier liquid and supercritical fluid. The impregnant is practically insoluble in the supercritical fluid, and favourably, a carrier body is practically insoluble in the supercritical fluid.

However, this invention uses liquid as a carrier; this liquid is supercritical carbon dioxide; and an autoclave is used. An untreated material is impregnated in the carrier mixed with additives inside the autoclave; and just like the case of Patent Document 1, a large amount of additive is likely to be consumed. The invention also consumes a large quantity of energy in order to keep the autoclave at high pressures and high temperatures.

The following documents form the state of the art: Masahiro Ohshima: Antec - Annual Technical conference May 2004 (2004-05) pages 580-582 and US 2003/228485A1 (Yusa Atsushi Et al), US55609963A (Tisack et al) disclose a method in accordance with the preamble of claim 1.

### SUMMARY OF THE INVENTION

### [Problems to be solved by the Invention]

The first object of the present invention is to provide a method of conducting dyeing or reforming by efficiently forming dye or reform-permeated layers on the moulding surface. Further, the second object is to provide a dyeing or reforming method of a moulding for producing a spotless, high quality dyed or reformed moulding at a low cost. Further the third object is to provide a dyeing or reforming method without using an organic solvent.

Further the fourth object is to provide a dyeing or reforming method of a moulding which can freely control dyeing concentration levels or reforming.

### [Means for Solving the Problems]

In order to accomplish the objects, in the dyeing or reforming method of the injection moulding according to the invention of Claim 1 comprising the steps of; filling thermoplastic resin in the die for injection moulding and then injecting a gas mixture of carbon dioxide gas and a dye or a reformer into a clearance between the resin filled in the die and the die to form a gas mixture layer between the resin and die, and the forming of a permeated layer of the gas mixture is formed on a surface of the resin to form a dyed layer or a reformed layer on a surface of the injection-moulded product. After the thermoplastic resin is filled in the die, inactive gas is injected between the filled resin and the die for forming a clearance between the resin and the die, and then the gas mixture is injected into this clearance for substituting the inactive gas with said gas mixture.

Further, in the embodiment according to Claim 2, dependent on Claim 1, the gas mixture is injected in the pressurised state or depressurized state, or during or after cooling and before the die is opened.

Further, in the embodiment of Claim 3, a complex mixture gas obtained by mixing a dye and reformer in carbon dioxide gas is used.

Further, in the embodiment of Claim 4, dependent on any of Claims 1-3, any of a reactive monomer or organic powder, inorganic powder, conductive powder, or an anti-static agent is used as a reformer singly or in combination.

Further, in the embodiment of Claim 5 dependent on any of Claims 1-4, a dyed layer or a reformed layer, or a combination thereof is formed on all or a portion of the visible face of the moulded product or on all or u portion of the surface other than the visible face of the moulded product.

Further, the embodiment of Claim 6, dependent on any of Claims 1∼5, the dyeing or reforming is performed in the duplicated state on a dye-permeated layer or reformer-permeated layer or a combined layer thereof once formed.

### [Operations]

Because the compound gas means a mixture gas or a compound mixture gas consisting of the carbon dioxide gas and the dye or (and) the reformer, the carbon dioxide gas softens the resin surface, and applies the pressure thereon; and therefore the dye or the reformer permeates into the resin, forming the colored permeated layer or the reformer permeated layer on the resin surface. The dye concentration and the reforming level of this colored permeated layer or reformer layer can be controlled freely by changing a blend ratio or a permeation depth and the like of the dye or the reformer. This dyeing or reforming can be applied just once: however, the dyeing or the reforming can be applied on top of the other twice or more than twice, using the same material or the other material.

### [Effect of the Invention]

The effects of the present invention are as follows.
1. The dyed or reformed permeated layer is formed on the moulding surface, improving anti-wearing and anti-peeling properties.
2. Because the dyeing or the reforming takes place inside the mould for the moulding, there is no special need for an autoclave or a pressure vessel. Therefore, there is no need for carrying in and out the moulding, which improves productivity.
3. Because no pressure device or heating device is installed, a small amount of energy is consumed, contributing to energy conservation.
4. No organic agent is used, contributing to the conservation of the work environment and the natural environment.
5. The depth of the dye permeated layer or reformer permeated layer can be freely adjusted with pressure and time control; for example, by deepening the dye permeated layer, a deep color can appear; by shallowing it, a faint color can appear.

### BRIEF DESCRIPTION OF THE DRAWING

[Fig. 1] An explanatory view showing a gas injection device and a mould to implement the present invention.
[Fig. 2] An explanatory view showing an example of forming space with gas injection pressure relating to the present invention.
[Fig. 3] An explanatory view showing an example of forming space by pulling back the mould relating to the present invention.
[Fig. 4] An explanatory view showing an example of reforming by injecting an inactive gas into a used multistage, after filling the resin and before the start of pressure keeping.
[Fig. 5] An explanatory view showing an example of reforming by injecting an inactive gas into a used multistage, after the completion of the minute opening.

### Expression of Reference Letters

- 1.: plastic compact
- 2.: die
- 3.: O-ring
- 4.: gas exhaust line
- 5.: gas injection line
- 6.: gas pressure adjustment back pressure valve
- 7.: gas injection device
- 8.: reformer
- 9.: electromagnetic switch control valve
- 10.: mixture generator
- 11.: mixture injection line
- 12.: reformer filler
- 13.: gas pressure moderator
- 14.: inactive gas injection line
- 15.: high pressure gas device or gas cylinder
- 16.: carbon dioxide gas injection line
- 17.: gas heater
- 18.: pressure gauge
- 19.: space
- 20.: gas inlet
- 21.: reformer injection line
- 22.: gas exhaust

### DESCRIPTION OF THE PREFERRED EMBODIMENTS

In the dyeing or reforming method of the present invention, after filling a mould with a thermal plastic resin, a gas mixture of a carbon dioxide gas and a dye which can soften a resin surface, or a gas mixture of the carbon dioxide gas and the reformer is injected between the resin and the mould, to form a space and dissolve the gas mixture on the resin surface.

This gas mixture can be injected any time during or after pressure keeping, or during cooling or after the cooling is over.

Or, after the completion of the filling, pressure keeping and cooling steps of the resin, the mould is opened minutely to form a space; and then the gas mixture is injected into the space; and then the gas pressure in the space is kept constant; and then the gas mixture is dissolved on the resin surface. After each of the gas mixtures is dissolved on the resin surface a remaining surplus gas not dissolved in the space is discharged; and then a compact is taken out. As the steps before injecting the compound mixture into the space, an inactive gas is injected into the space to keep the pressure inside the space constant. Next, the gas mixture which has been kept at a pressure higher than that of the inactive gas inside the space is injected to replace with the inactive gas.

The object of injecting and replacing this inactive gas is to prevent the dye, the reformer or the like from separating or separating out from the CO₂ due to a pressure fall, because when the gas mixture is injected into a mould cavity and an injection line, the gas is suddenly discharged from a gas mixture generator with a high air pressure to a space with a low air pressure.

Therefore, in advance the inactive gas with an air pressure lower than that of the gas mixture is injected into the mould cavity and the injection line, and then the gas mixture is injected to replace it, so that a change in the air pressure can be reduced. As a result a concentration of the gas mixture can be kept more stable.

The desirable difference in air pressures between the inactive gas and the gas mixture is in the range from 3 to 5 MPa.

After the gas mixture is dissolved in a surface of resin, surplus gas mixture not having been dissolved in the resin surface and remaining in the cavity is exhausted to the outside and then the moulded product is taken out.

A pressure drop occurring between the injection line into the die cavity can be reduced, and a density of the gas mixture injected into the die cavity can be maintained in the more stable state.

As described above, immediately after the resin is filled in, or after the dies are opened a little, by injecting the gas mixture for forming a clearance and then performing moulding, reformation dyeing or giving functionality to the resin surface becomes possible, which insures formation of a homogeneous surface without any patch.

The thermoplastic resin available for a material to provide a moulded product according to the present invention includes, a styrene-based resin (such as polyethylene, butadiene-styrene copolymer, acrylic nitrile-styrene copolymer, acrylic nitrile-butadiene-styrene copolymer), ABS resin, polyethylene, polypropylene, ethylene-propylene resin, ethylene-ethylacrylate resin, polyvinyl chloride, polybutene, polycarbonate, polyacetal, polyphenilene oxide, polyvinyl alcohol, polymethyl methacrylate, saturated polyester resin (such as polyethylene telephthalate, and polybutylene telephthalate), biodegradable polyester resin (such as hydroxycarboxylic acid condensate such as polylactic acid, condensate of diol and dicarboxylic acid such as polybutylene succinate), polyamide resin, polyimide resin, fluorine resin, polysulphon, polyether sulphon, polyallylate, polyether etherketone, mixture of one or more types of liquid crystal polymers, and resin with various types of inorganic or organic fillers mixed therein. Of these thermoplastic resins, polycarbonate, polymetacrylate, and polypropylene arc especially preferable.

There is no specific restriction over a type of carbon dioxide used for mixing with a dye or a reformer so far as the gas can be dissolved in a resin surface, but carbon dioxide gas in the supercritical state having the highest solubility among the materials listed above is preferable.

As the inactive gas to be previously injected into the clearance in the present invention, carbon dioxide, argon, helium, nitrogen, or oxygen, each of which has no possibility of burning other solvent (incombustibility), is not present in the environment harmfully and not odorous, and is chemically inactive, may be used.

There is no specific restriction over a die or a reformer used in the present invention, and any of the organic powder, inorganic powder, conductive powder, an antistatic agent, and a reactive monomer may be used for the purpose on the condition that the material can give to a resin surface such functionality as dyeing, abrasion resistance, conductivity, hardness, brightness, adaptability to being coated, spectral characteristics, and anti-static effect. More specifically, a die used for dyeing a resin surface and giving the spectral characteristics in the present invention includes, but not limited to, organic powder such as nitro die, methane die, quinoline die, aminonaphthoquinone die, coumarin die, and preferably anthraquinone die, tricyanovinyl die, azo die, dinitrophenyl amine, any combination thereof; and inorganic powder such as silver white, ivory black, peach black, lamp black, carbon black, and any combination thereof. Further the reformer used for recording a resin surface and giving thereto functionality such as high brightness, abrasion resistance, and surface hardness in the present invention includes inorganic powder such as mica titanium, titanium oxide, gold powder, and calcium carbonate, and fluorine powder. Further as a reformer for coating a resin surface and giving conductivity thereto, powder obtained by coating any material selected from the group consisting of zinc powder, silver powder, nickel powder, mica, sericite and a combination thereof with conductive metal may be used in the present invention. Further as a reformer for realizing elasticity or other various functions such as chemical resistance on a resin surface by causing binding with the resin surface or a bringing reaction therewith, any material selected from the groups consisting of protein, polypeptide, nucleotide, drug, or acrylic acid, ethylene, styrene, isobutyl vinyl ether, methyl acetate, vinyl chloride, propylene, amino acid ester, a reactive monomer such as polyphenol and silicone, and a combination thereof may be used in the present invention. As an anti-static agent, any material selected from the group consisting of a water-soluble surfactant, polyoxyalkylene ether, polyoxyethylene derivative, sorbitan fatty acid ester, intermediate purity monoglyceride stearin, polyethylene glycol stearate, and a combination thereof may be used in the present invention. Further a combination of the organic powder with either one of inorganic powder and an anti-static agent may be used as a reformer in the present invention.

### Example 1

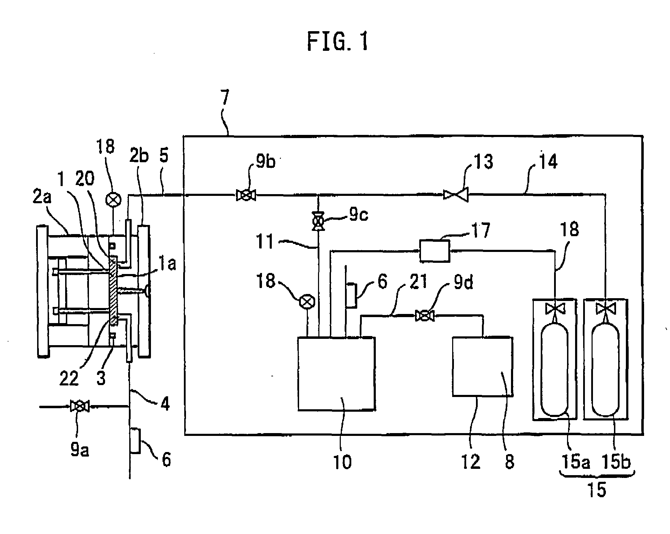

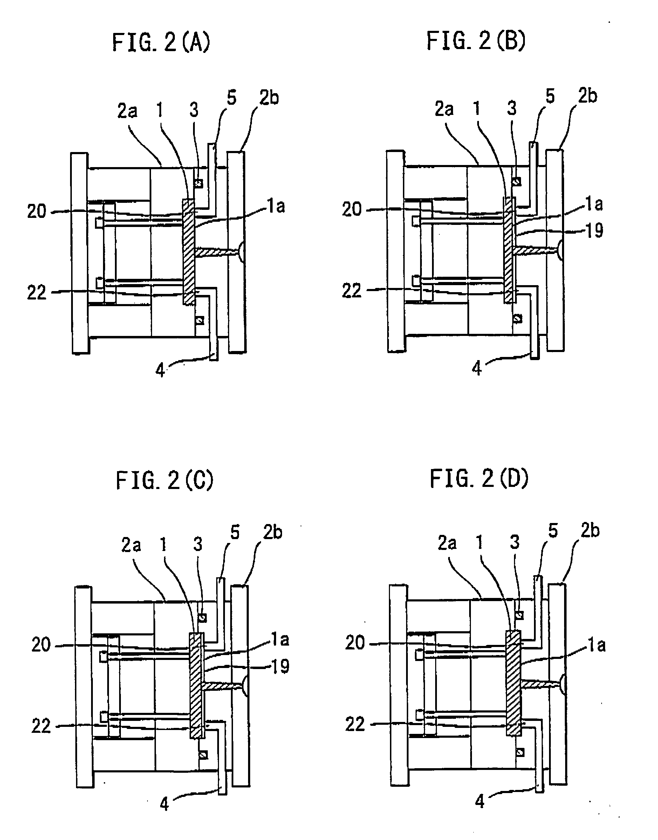

An embodiment of the invention is described below with reference to Fig. 1 and Fig. 2.

Fig. 1 shows a die and an injector employed for carrying out the present invention. The reference numeral 1 indicates a cavity formed when a die 2b in the fixed side and a die 2a in the movable side are tightened to each other; the reference numeral 3 indicates an O-ring for preserving a gas pressure in the cavity and preventing leakage of gas to outside of the cavity; the reference numerals 9a, 9b, 9c, 9d indicate electromagnetic switching control value for controlling; reference numeral 18 indicates a pressure gauge; and the reference numeral 6 indicates a back pressure valve for exhausting a gas to the outside only when a gas pressure in the cavity or in each vessel is not less than a pre-specified pressure level. Further the reference numeral 4 indicates a gas exhaust line connecting the back pressure value to a gas exhaust port 22 for exhausting a gas inside the cavity 1 to the outside. A surplus carbon of dioxide gas mixture and dye (dyeing material) or a reformer is exhausted to the outside through this exhaust line 4.

The reference numeral 7 indicates a gas injector, and in this gas injector 7, the reference numeral 15a indicates a gas bomber with carbon dioxide gas filled therein, and the reference numeral 15b indicates a gas bomber 15b with active gas filled therein. This gas bomber 15 and the die 2a in the movable side are connected to each other with a gas injection line 5 connected to one, two or more gas inlets formed on a cavity face 1a in the visible face side. This gas injection line 5 branches to two branch lines, namely an inactive gas injection line 14 and a gas mixture injection line 11 for injection of a gas mixture of carbon dioxide and a dye or a reformer, and the inactive gas injection line 14 connects a gas pressure adjuster 13 to the electromagnetic switching control valve 9b, and the other injection line, namely the gas mixture injection line 11 is connected to a gas mixture generating vessel 10 for mixing a carbon dioxide gas with a dye or a reformer 8 and preserving the gas mixture in the pressurized state, and the two lines are connected to each other via the electromagnetic switching control value 9c.

Further a reformer pressure feed pump 12 and the electromagnetic switching control valve 9d are connected to each other with a reformer injection line 21 to the gas mixture generating vessel 10 for exhausting a reformer 8 to the gas mixture generating vessel 10 in the constant state so that the dissolving densities of the carbon dioxide gas and the reformer 8 in the gas mixture generating vessel 10 are stabilized. Further a carbon dioxide gas injection line 16 connecting the gas mixture generating vessel 10 to the gas bomber 15a with carbon dioxide gas filled therein comprises a gas warmer 17 for adjusting temperature of the carbon dioxide gas in the gas mixture generating vessel 10 so that the gas temperature is always kept at a level best suited to mixing the carbon dioxide gas with a dye or a reformer.

The injection moulding method according to the present invention is described below with reference to Figs. 2A, 2B, 2C, and 2D.

The gas injection 7 shown in Fig. 1 is developed by the applicant and the injection moulding machine employed in this invention is a moulding machine with the die tightening pressure of 220 t (produced by Nihon Seiko K. K.: J220E2-P-2M). The experiment was conducted using azo disperse dye (produced by Sumitomo Kagaku Kogyo K. K.: Sumikaron Blue E-FBL) as organic powder and inorganic powder of carbon black (produced by Mitsubishi Kagaku K. K.: Die black N5505M) and a zinc powder of conductive material (produced by Hakusui Tech. K. K.; R powder) each as a reformer. Polycarbonate (produced by Mitsubishi Engineering Plastics K. K.: H3000) was used as a resin. The moulded produce obtained in the experiment is a flat body with the dimensions of 32 mm (length), 32 mm (width), and 2 mm (thickness). This moulded product was filled in the die cavity 1 (made of material S45C, bushing type) with the injection pressure of 56 MPa, filling time of 0.5 sec, and melted resin temperature of 280 °C by using pressurized hot water.

After the melted resin was filled, as shown in Fig. 2B, any of a gas mixture of carbon dioxide gas and organic azo disperse dye, a gas mixture of carbon dioxide gas and carbon black, and a gas mixture of carbon dioxide gas and zinc powder was injected with the gas injection through the gas injection port 5 with the pressure of 15 MPa, the gas temperature of 70 °C, and injection time of 2 seconds onto a skin face as well as to the cavity face 1a contacting the skin face, and further the gas pressure in the space was kept at a constant level.

Then the gas was pressurized with a pressure of 90 MPa for 5 seconds to compress the space 19 and moulding was performed in the pressurized state by dissolving the gas mixture in the skin face and softening the skin face (C). Then the gas mixture stored in the die cavity 1 was exhausted (D). Then the mixture gas of carbon dioxide and an organic azo disperse dye, mixture gas of carbon dioxide and carbon black, gas mixture of carbon dioxide and zinc powder and the like not having been dissolved in the skin layer was exhausted through the reverse route to that for injection to the electromagnetic switching control valve 9a side.

Any of the obtained coloured and reformed moulded products had no patch on a surface thereof, and a result of a visual check and sensory assessment is shown in Table 1. In this table, O indicates that no patch is present, Δ indicates that a few patches are present. A cross section of each product was observed with a CCD camera zoom lens (produced by K.K Keyence; VH-Z150), and degrees of dyeing and reformation were assessed.

### Example 2

Moulding was performed by changing the conditions for gas injection employed in Example 1 such as a temperature of a mixture of carbon dioxide and an organic azo disperse dye, time for injection, and an injection pressure. In Example 2, the gas temperature was set to 50, 60, and 70 °C, the gas injection time was set to 0.5, 1.0 and 2.0 seconds, and the injection pressure was set to 5, 10 and 15 MPa. The moulded products obtained as described above were substantially influenced by a temperature of the mixed gas, injection pressure, and injection time, and with any of the parameters described above, the higher temperature, highest pressure, and longest injection time provided moulded products excellently coloured and reformed. A cross section of each product was observed with a CCD camera zoom lens (produced by K.K Keyence; VH-Z150), and degrees of dyeing and reformation were assessed. A result is shown in Table 2.

### Comparative Example 1

In the method of injecting gas mixture of carbon dioxide gas and an organic azo disperse dye employed in Example 1, the injection time was fixed to 2. 0 seconds with the injection pressure to 15 MPa, and the gas temperature was set to 20, 30, 40 °C to perform moulding. The temperature in the die cavity 1 was fixed to 70 °C. The gas temperature was set to 70 °C or more, namely to 80, 90, and 100 °C, but the degree of dyeing did not substantially change from that at 70 °C, so that substantially same dyeing degree was provided at each of the gas temperatures. As a result, it was confirmed that the obtained moulded products were not coloured at all as compared to the moulded products obtained in Example 2. A result of visual check and sensory assessment of the surfaces of the moulded products is shown in Table 2. A cross section of each product was observed with a CCD camera zoom lens (produced by K.K Keyence; VH-Z150), and degrees of dyeing and reformation were assessed.

### Comparative Example 2

In the method of injecting the gas mixture of carbon dioxide gas and an organic azo disperse dye employed in Example 2, the gas temperature was fixed to 70 °C, the injection pressure was fixed to 15 MPa, and further the gas injection time was set to 0.1 and 0.3 seconds to carry out moulding. Further the temperature in the die cavity 1 was fixed to 70 °C. As a result, it was confirmed that the obtained moulded products were not coloured at all as compared to those obtained in Example 2. A result of a visual check and sensory assessment for the product surfaces is shown in Table 2. A cross section of each product was observed with a CCD camera zoom lens (produced by K.K Keyence; VH-Z150), and degrees of dyeing and reformation were assessed.

### Example 3

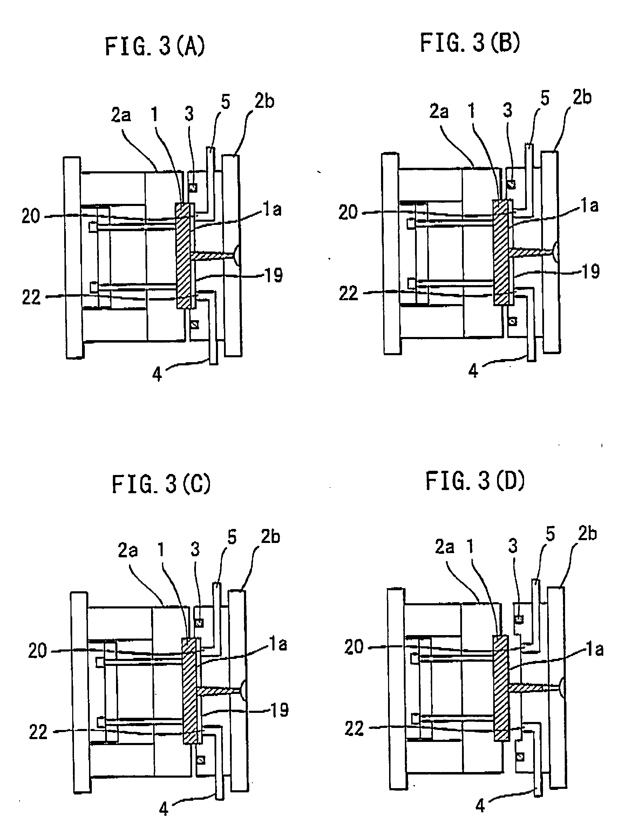

Fig, 3A to Fig. 3D; polycarbonate (produced by Mitsubishi Engineering Plastic K. K.: H3000) as resin. The moulded product obtained in this step has the size of 32.00 mm (length), 32.0 mm (width), and 2.0 mm (thickness). Further, this moulded product was filled in the die cavity 1 (made from material S45C, bushing type) with pressurized hot water under the conditions of injection pressure of 56 MPa, filing time of 0.5 second, and melted resin temperature of 280 °C. In this moulding method, immediately after the melted resin was filled, kept in the pressurized state, and cooled, the die 2a in the movable side was retarded to release the die tightening pressure, and a clearance of about 0.1 mm, or in the range from 0.1 mm to 1.0 mm was forcefully formed between the skin layer in the visible side and the cavity face 1a (A), and any of the gas mixtures employed in Example 1 with the pressure set to 15. 0 MPa was kept under the pressure of 15 MPa, and the gas was injected with the gas injector from the gas inlet port 5 into a clearance 19 at the temperature of 70 °C over 30.0 seconds (B).

Then the gas mixture was dissolved in the skin layer for softening the skin layer, and then the gas mixture not dissolved in the skin layer and remaining in the clearance was exhausted (C). Then the dies were separated and the moulded product was taken out (D). As a result, each of the obtained moulded products did not have any patch. A result of a visual check and sensory assessment for the obtained moulded products is shown in Table 1. A cross section of each product was observed with a CCD camera zoom lens (produced by K.K Keyence; VH-Z150), and degrees of dyeing and reformation were assessed.

### Example 4

In the gas injection method employed in Example 3, the conditions such as a temperature of gas mixture of carbon dioxide gas and an organic azo disperse dye, injection time and injection pressure were changed to carry out moulding. The gas temperature was set to 50, 60, 70 °C, the gas injection time was set to 10.0, 20.0 and 30.0 seconds, and the injection pressure was set to 10 and 15 MPa. The obtained moulded products were substantially influenced by the gas temperature, pressure, and injection time, and with the parameters described above, the highest temperature, highest pressure and longest injection time provided excellently coloured and reformed moulded products. A cross section of each product was observed with a CCD camera zoom lens (produced by K.K Keyence; VH-Z150), and degrees of dyeing and reformation were assessed. The result is as shown in Table 2.

### Comparative Example 3

In the gas injection method employed in Example 3, after the clearance was formed by slightly opening the dies, the time for injecting a gas mixture of carbon dioxide gas and an organic azo disperse dye was fixed to 2 seconds with the injection pressure fixed to 15 MPa, and moulding was performed by changing the gas temperature to 20, 30, and 40 °C. The moulding was performed at gas temperature of 70 °C or more, namely at 80, 90, and 100 °C, but the degrees of dyeing were not different from that at 70 °C, and almost the same degrees of dyeing were provided. The obtained moulded products were not colourcd at all. A cross section of each product was observed with a CCD camera zoom lens (produced by K.K Keyence; VH-Z150), and degrees of dyeing and reformation were assessed. The result is as shown in Table 2.

### Comparative Example 4

In the gas injection method employed in Example 3, after the clearance was formed by slightly opening the dies, temperature of the gas mixture of carbon dioxide gas and an organic azo disperse dye was fixed to 70 °C with the injection pressure fixed to 15 MPa, and moulding was performed by changing the gas injection time to 3.0 seconds and 5.0 seconds. Temperature in the die cavity 1 was fixed to 70 °C. As a result, it was confirmed that the obtained moulded products had not been coloured as compared to those in Example 2. A result of the visual check and sensory assessment for the product surfaces is shown in Table 2. Further cross section of each product was observed with a CCD camera zoom lens (produced by K.K Keyence; VH-Z150), and degrees of dyeing and reformation were assessed.

### Example 5

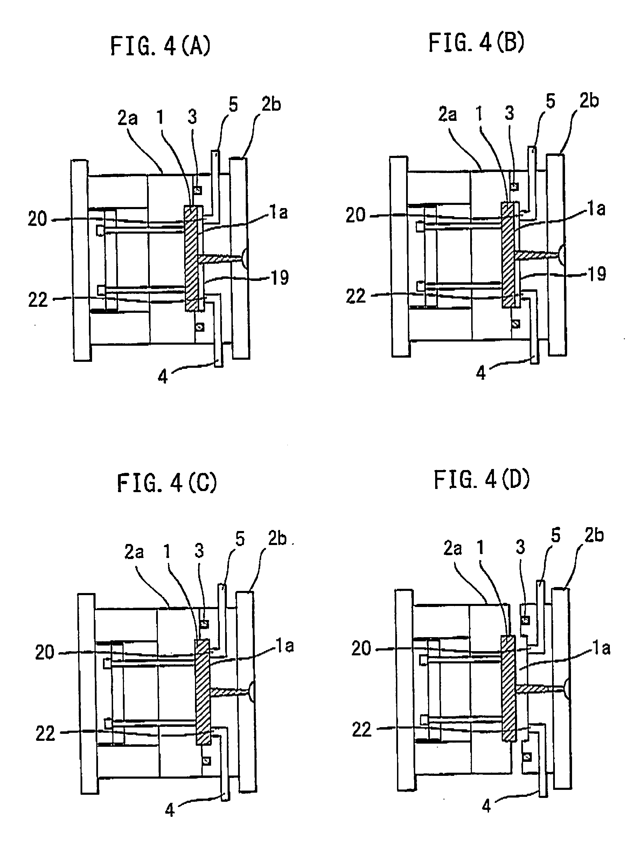

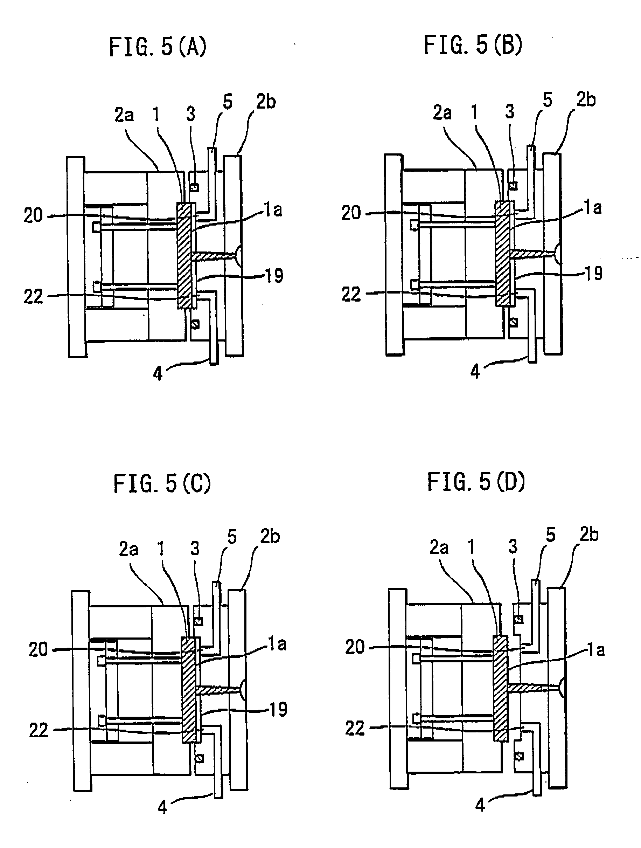

Fig. 4 and Fig. 5A to Fig. 5D; in this moulding method, inactive gas and gas mixture are injected step by step. More specifically, after the moulded resin was filled, before the start of pressurizing, or after the resin was filled and kept in the pressurized state and then was cooled, the die 2a in the movable side was retarded to release the die tightening pressure, and the clearence 19 of about 0.1 mm, or in the range from 0.1 mm to 1.0 mm was forcefully formed between the skin layer in the visible side and the cavity face 1a, and then the gas with the pressure set to 10 MPa was injected with the gas injector 7 from the gas inlet port 5 for 2 seconds into the clearance 19 (Refer to Fig. 4A and Fig. 5A).

Then the gas mixture with the pressure set to 10 MPa, which is higher than a gas pressure in the clearance 1 and also with the temperature set to 70 °C was injected for 2 seconds one instance and for 30.0 seconds in another instance for substitution (Refer to Fig. 4B and Fig. 5B). Then, in the first instance, the gas mixture was kept under the pressure of 90 MPa for 5.0 seconds to dissolve the gas mixture in the skin layer compressing the clearance for softening the skin layer with the skin layer again tightly contacted to the cavity face (Fig. 4C). Then the gas mixture not dissolved in the skin layer and remaining in the clearance was exhausted, and the dies were separated with the moulded product taken out (Fig. 4D).

In the second instance, the gas mixture not dissolved in the skin layer and remaining in the clearance was exhausted (Fig. 5C), and then the dies were separated to take out the moulded product (Fig. 5D). Any of the obtained products did not have any patch, and a result of visual check and sensory assessment for the moulded products is shown in Table 1.

Further a cross section of each product was observed with a CCD camera zoom lens (produced by K.K Keyence; VH-Z150), and degrees of dyeing and reformation were assessed.

**TABLE 1**

| | Type of gas | Clearance forming method | Type of die or reformer | Gas injection pressure | Gas injection method | State of surface dyeing or reformation | Degree of dyeing or reformation |
|---|---|---|---|---|---|---|---|
| Example 1 | Carbon dioxide | Gas pressure | Organic azo disperse dye | Constant | After resin was filled | 0 | 17 |
| Example 1 | | Gas pressure | Carbon black | | | Δ | 12 |
| Example 1 | | Gas pressure | Zinc powder | | | Δ | 12 |
| Example 3 | Carbon dioxide | Die in the visible side retarded | Organic azo disperse dye | Constant | After resin was cooled | 0 | 14 |
| Example 3 | | Die in the visible side retarded | Carbon black | | | Δ | 11 |
| Example 3 | | Die in the visible side retarded | Zinc powder | | | Δ | 10 |
| Example 5 | Carbon dioxide | Gas pressure | Organic azo disperse dye | Step by step | After resin was filled | 0 | 19 |
| | | Die in the visible side retarded | | | After resin was cooled | 0 | 14 |
| Example 5 | | Gas pressure | Carbon black | | After resin was filled | Δ | 15 |
| | | Die in the visible side retarded | | | After resin was cooled | Δ | 11 |
| Example 5 | | Gas pressure | Zinc powder | | After resin was filled | Δ | 15 |
| | | Die in the visible side retarded | | | After resin was cooled | Δ | 11 |

| | | | | | | | |
|---|---|---|---|---|---|---|---|
| 0 No patch Δ Few patch | | | | | | | |

**Table 2**

| | Timing for gas injection | Temperature in die cavity 1(°C) | Gas injection time (S) | Gas temperature (°C) | Gas pressure (Mpa) | Dyeing depth (µm) |
|---|---|---|---|---|---|---|
| Example 2 | After completion of filling and before start of pressurizing | 70 | 2 | 70 | 15 | 17 |
| | | | 1 | | 10 | 12 |
| | | | 0.5 | | 5 | 11 |
| | | 60 | 2 | 60 | 15 | 14 |
| | | | 1 | | 10 | 10 |
| | | | 0.5 | | 5 | 6 |
| | | 50 | 2 | 50 | 16 | 11 |
| | | | 1 | | 10 | 7 |
| | | | 0.5 | | 5 | 4 |
| Example 4 | After completion of cooling, dies slightly separated | 70 | 30 | 70 | 15 | 14 |
| | | | 20 | | 10 | 10 |
| | | | 10 | | 5 | 8 |
| | | 60 | 30 | 60 | 15 | 11 |
| | | | 20 | | 10 | 7 |
| | | | 10 | | 5 | 5 |
| | | 50 | 30 | 60 | 15 | 7 |
| | | | 20 | | 10 | 4 |
| | | | 10 | | 5 | 3 |
| Comparative example 1 | After completion of filling, and before start of pressurizing | 70 | 2 | 40 | 15 | 0 |
| | | | | 30 | | 0 |
| | | | | 20 | | 0 |
| Comparative example 2 | After completion of filling and before start of pressurizing | 70 | 0.3 | 70 | 15 | 0 |
| | | | 0.1 | | | 0 |
| Comparative example 3 | After completion of cooling, dies slightly separated | 70 | 30 | 40 | 15 | 0 |
| | | | | 30 | | 0 |
| | | | | 20 | | 0 |
| Comparative example 4 | After completion of cooling, dies slightly separated | 70 | 5 | 70 | 15 | 0 |
| | | | 3 | | | 0 |

### Examples 6 and 7 (deleted)

### Example 8

A bushing was assembled with the die to form a clearance making use of the action of the bushing for the purpose to dye or reform moulded products. The conditions employed in this example were the same as those employed in Examples 1 to 7, and the same objective could be achieved.

### Example 9

In this example, a moulded product was once subjected to dyeing or reformation, and then other dye and reformer were permeated under the same conditions, and this overlaid dyeing or reformation is effective when a complicated colour is desirable or when performance and functionality of moulded products are to be improved with combined effects.

### Example 10

Although gas mixture of carbon dioxide and a dye or that of carbon dioxide and a reformer is injected after the resin is filled in Example 1 , but in this example, the gas mixture was injected in the pressurized state or in the depressurized state, during cooling or after the cooling step was over, and the substantially same result as that in Example 1 was obtained.

### Example 11

An anti-static agent was used as a reformer under the same conditions as those employed in Example 1. The anti-static agent used in this example was a water-soluble surfactant (produced by Kasuga Denki K. K.; lolyzer). When the water-soluble surfactant was mixed therein, an excellent anti-static effect could be obtained. Further products each having no patch on the surface could be obtained. The result is shown in Table 3. Moulded products each with the surface subjected to no specific processing and those subjected to the specific processing were rubbed in the same direction 10 times to electrify the products, and then the products were dropped onto powder of carbon black (produced by Mitsubishi Kagaku K. K; Dia-black N550M) with the drop height of 30 mm, and then reducing the drop height by 5 mm. Adhesion of carbon black onto the product surface was visually checked and the distance was measured to assess the anti-static effect.

**Table 3**

| | Molded product | Types of gas | Gas injection method | Type of reformer | | Reformed State | Anti-static effect | Distance allowing for adhesion of carbon powder(mm) |
|---|---|---|---|---|---|---|---|---|
| Example 11 | Not process | Carbon dioxide | After completion of resin filling | Water-soluble surfactant | Constant | - | None | 20 |
| | Processed | | | | | 0 | Observed | 2 |

| | | | | | | | | |
|---|---|---|---|---|---|---|---|---|
| - No change 0 No patch | | | | | | | | |

### [Industrial Applicability]

The dyeing method according to the present invention may be applied to all products obtained by injection. The moulded products reformed according to the present invention by using conductive fine powder can be used as a film or a flat plate for electronic devices in the field of, for instance, electro-magnetic shielding. This field is only one example of many fields in which the present invention can advantageously be applied.

## Claims

1. A method of dyeing or reforming an injection-moulded product comprising the steps of: filling thermoplastic resin in the die (2a, 2b) for injection moulding and then injecting a gas mixture of carbon dioxide gas (15a) and a dye or a reformer (15b) into a clearance between the resin filled in the die and the die to form a gas mixture layer between the resin and die, and the forming of a permeated layer of the gas mixture is formed on a surface of the resin to form a dyed layer or a reformed layer on a surface of the injection-moulded product and **characterised in that** after the thermoplastic resin is filled In the die, inactive gas is injected between the filled resin and the die for forming a clearance between the resin and the die, and then the gas mixture is injected into this clearance for substituting the inactive gas with said gas mixture.

2. The method of dying or reforming an injection-moulded product according to claim 1, wherein, the gas mixture is injected in the pressurised state or depressurised state, or during or after cooling and before the die is opened.

3. A method of dyeing or reforming an injection-moulded product according to any of claims 1 to 2, wherein any of a reactive monomer or organic powder, inorganic powder, conductive powder, or an anti-static agent is used as a reformer singly or in combination.

4. A method of dyeing or reforming an injection-moulded product according to any of claims 1 to 3, wherein a dyed layer or a reformed layer, or a combination thereof is formed on all or a portion of the visible face of the moulded product or on all or a portion of the surface other than the visible face of the moulded product.

5. A method of dyeing or reforming an injection-moulded product according to any of claims 1 to 4, wherein the dyeing or reforming is performed in the duplicated state on a dye-permeated layer or reformer-permeated layer or a combined layer thereof once formed.

## Patentansprüche

1. Verfahren zum Färben oder Umformen eines Spritzgussprodukts, das folgende Schritte umfasst: Einfüllen von thermoplastischem Kunstharz in die Pressform (2a, 2b) zum Spritzgießen und daraufhin Einspritzen eines Gasgemischs aus Kohlendioxidgas (15a) und eines Farbstoffs oder eines Umformers (15b) in einen Zwischenraum zwischen dem Kunstharz, das in die Pressform eingefüllt ist, und der Pressform, um eine Gasgemischschicht zwischen dem Kunstharz und der Pressform zu bilden, wobei die Bildung einer eindringenden Schicht des Gasgemischs auf einer Oberfläche des Kunstharzes durchgeführt wird, um eine gefärbte Schicht oder eine umgeformte Schicht auf einer Oberfläche des Spritzgussprodukts zu bilden, und **dadurch gekennzeichnet, dass** nachdem das thermoplastische Kunstharz in die Pressform eingefüllt wurde, ein inaktives Gas zwischen das eingefüllte Kunstharz und die Pressform eingespritzt wird, um einen Zwischenraum zwischen dem Kunstharz und der Pressform zu bilden, wobei das Gasgemisch daraufhin in diesen Zwischenraum eingespritzt wird, um das inaktive Gas gegen das Gasgemisch auszutauschen.

2. Verfahren zum Färben oder Umformen eines Spritzgussprodukts nach Anspruch 1, wobei das Gasgemisch im unter Druck stehenden Zustand oder im drucklosen Zustand oder während des Abkühlens oder nach dem Abkühlen und bevor die Pressform geöffnet wird eingespritzt wird.

3. Verfahren zum Färben oder Umformen eines Spritzgussprodukts nach einem der Ansprüche 1 bis 2, wobei ein reaktives Monomer oder ein organisches Pulver, ein anorganisches Pulver, ein leitfähiges Pulver oder ein antistatisches Mittel einzeln oder in Kombination als Umformer verwendet wird.

4. Verfahren zum Färben oder Umformen eines Spritzgussprodukts nach einem der Ansprüche 1 bis 3, wobei eine gefärbte Schicht oder eine umgeformte Schicht oder eine Kombination daraus auf der gesamten sichtbaren Fläche des Spritzgussprodukts oder auf einem Teil davon oder auf der gesamten Oberfläche des Spritzgussprodukts, die nicht die sichtbare Fläche ist, oder auf einem Teil davon, gebildet wird.

5. Verfahren zum Färben oder Umformen eines Spritzgussprodukts nach einem der Ansprüche 1 bis 4, wobei das Färben oder Umformen in dem duplizierten Zustand auf einer von Farbstoff durchdrungenen Schicht oder einer von Umformer durchdrungenen Schicht oder einer daraus bestehenden kombinierten Schicht durchgeführt wird, nachdem sie gebildet wurde.

## Revendications

1. Un procédé pour teindre ou reformer un produit moulé par injection comportant les étapes de : verser de la résine thermoplastique dans la matrice (2a, 2b) en vue d'un moulage par injection et ensuite injecter un mélange gazeux de gaz de dioxyde de carbone (15a) et d'une teinture ou d'un reformeur (15b) dans un espace entre la résine versée dans la matrice et la matrice pour former une couche de mélange gazeux entre la résine et la matrice, et la formation d'une couche imprégnée du mélange gazeux est formée sur une surface de la résine pour former une couche teinte ou une couche reformée sur une surface du produit moulé par injection et **caractérisé en ce que** après que la résine thermoplastique a été versée dans la matrice, un gaz inactif est injecté entre la résine versée et la matrice pour former un espace entre la résine et la matrice, et ensuite le mélange gazeux est injecté dans cet espace pour remplacer le gaz inactif par ledit mélange gazeux.

2. Le procédé pour teindre ou reformer un produit moulé par injection selon la revendication 1, où le mélange gazeux est injecté dans l'état pressurisé ou l'état dépressurisé, ou durant ou après le refroidissement et avant que la matrice soit ouverte.

3. Un procédé pour teindre ou reformer un produit moulé par injection selon n'importe lesquelles des revendications 1 à 2, où n'importe quel élément parmi un monomère réactif ou une poudre organique, une poudre inorganique, une poudre conductrice, ou un agent antistatique est utilisé comme reformeur séparément ou en combinaison.

4. Un procédé pour teindre ou reformer un produit moulé par injection selon n'importe lesquelles des revendications 1 à 3, où une couche teinte ou une couche reformée, ou une combinaison de ces dernières est formée sur l'intégralité ou une portion de la face visible du produit moulé ou sur l'intégralité ou une portion de la surface autre que la face visible du produit moulé.

5. Un procédé pour teindre ou reformer un produit moulé par injection selon n'importe lesquelles des revendications 1 à 4, où la teinture ou la reformation est réalisée dans l'état dupliqué sur une couche imprégnée de teinture ou une couche imprégnée de reformeur ou une couche combinée de ces derniers une fois formée.
